# EUROPEAN PATENT APPLICATION

(11) **EP 1 426 278 A2**
(43) Date of publication of application: **09.06.2004**
(21) Application number: 03257649.8
(22) Date of filing: 04.12.2003
(51) Int. Cl.: B62K 15/00

(54) **Folding device for bicycle body and transom**

(30) Priority: 05.12.2002 CN 02280221 U
(71) Applicant: Ying, Xiongxin, Zhi Ying Town Yong Kang City Zhe Jiang Province 321306 (CN)
(72) Inventor: Ying, Xiongxin, Zhi Ying Town Yong Kang City Zhe Jiang Province 321306 (CN)
(74) Representative: Lamb, Richard Andrew

(57) **Abstract**

The present invention discloses a folding device for a bicycle body and transom which comprises bicycle body (8), a transom (10) jointed to the bicycle body (8) by means of hinge. A tightening lug bolt (3) and a eccentric axle (12) is inserted into a hole on head of said lug bolt (3) and body (8) of the bicycle successively to provide a hinge joint. A groove (11) for receiving and securing the end of the lug bolt (3) is provided on said transom (10). The end of lug bolt (3) is engaged with a nut (2) which is embedded into said groove (11) in order to join the transom (10) with the body (8). The folding device further comprises a torsion spring (7), one end of which is fixed to the bicycle body (8) and the other end is disposed on the lug bolt (3). The eccentric axle (12) is connected to a lever (6). The head of said nut (2) is fastened to the lug bolt (3) by a screw (1). The device has the advantages of reasonable construction, more convenient and timesaving folding procedure, safe and reliable manipulation and beautiful, tasteful outward appearance, etc.

## Description

The present invention relates to a folding device, and in particular to an improved folding device for the body of an electrobicycle or ordinary bicycle.

To facilitate transportation, packing and carrying, an electrobicycle or ordinary bicycle are generally designed to be of a foldable structure. The current means of folding the body of an electrobicycle or ordinary bicycle is to joint the transom to the bicycle body with hinge and then to fix them by tightening screws. Although folding of the bicycle body can be achieved in this way, in operation, tools must be used to mount and dismount the screws in order to proceed with the folding. The folding is not only troublesome, but also time-consuming; additionally, the screw is easy to loosen, affecting normal driving.

To address the shortcomings of prior art, and in particular that tools must be used to proceed with the folding of the electrobicycle or ordinary bicycle, an object of the present invention is to provide a more convenient and more timesaving folding device for transom and bicycle body, and/or to provide improvement generally.

According to the present invention there is -provided an overturning and folding device for a bicycle body and transom as described in the accompanying claims.

The technical solution adopted by an aspect of an embodiment of the present invention is that the folding device comprises bicycle body, a transom jointed to the bicycle body by means of hinge, a tightening lug bolt and an eccentric axle which is inserted into a hole on head of said lug bolt and body of the bicycle successively to provide the hinge joint. A groove for receiving and securing the end of the lug bolt is provided on said transom. The end of lug bolt is engaged with a nut which is embedded into said groove in order to joint the transom with the body.

The folding device further comprises a torsion spring, one end of which is fixed to the bicycle body and the other end is disposed on the lug bolt.

The eccentric axle is connected to a lever.

The head of said nut is fastened to the lug bolt by a screw.

In an aspect of an embodiment of the present invention, with rotation of the eccentric axle, the tightening lug bolt is made to move axially in the groove of the transom by linkage with the eccentric axle, so as to loosen or tighten the connection of the bicycle body and transom. Through tight pressing of the torsion spring on the tightening lug bolt to ensure that the tightening lug bolt will not detach from the groove, even if the device is loosened, safe driving is guaranteed. The device has such advantages as simple and reasonable construction, more convenient and timesaving folding operation, and beautiful, tasteful outward appearance, etc.

The present invention will now be described by way of example only with reference to the following figures in which:
Fig. 1 is a schematic diagram of the members of the folding device according to an embodiment of the present invention.
Fig. 2 is a schematic diagram of the folding device according to an embodiment of the present invention in a folded state.
Fig. 3 is a schematic diagram of the folding device according to an embodiment of the present invention in a fastened state.

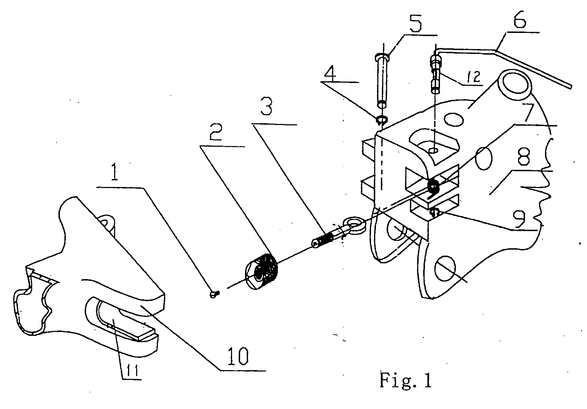

Fig. 1 shows the specific embodiment of the folding device for bicycle body and transom of the present invention. It comprises the bicycle body 8 and a transom 10. The transom 10 is jointed to the bicycle body 8 by means of a hinge axle 5. The end of hinge axle 5 is locked within the axle hole by a garter spring 4. A tightening lug bolt 3, with a hole on its head, is jointed to the bicycle body 8 by means of an eccentric axle 12. Namely, the eccentric axle 12 is inserted into a hole on bicycle body 8 and the hole on the head of lug bolt 3 successively so as to provide a hinge joint between bicycle body 8 and lug bolt 3. A groove 11 is provided on said transom 10, which may be formed in U or V shape for receiving the end of the lug bolt 3. The eccentric axle 12 is locked by a garter spring 9 onto the body 8.

The end of the tightening lug bolt 3 is engaged with a nut 2. A fixing screw 1 may also be used to ensure the connection between lug bolt 3 and nut 2. The end of tightening lug bolt 3 is received within the groove 11 of transom 10 and the nut 2 is chucked, and secured against rotation, by the shoulder of groove 11 of transom 10. The nut 2 can be a knurling nut or other kind nut. Other known fastening structures to keep the end of lug bolt 3 detachable engaged with the groove 11 can be used in this invention.

In order to make the fastening safer and more reliable, a torsion spring 7 is provided around the eccentric axle 12. One end of the torsion spring 7 is fixed to the bicycle body 8 and the other end disposed on the tightening lug bolt 3. In the unfolded position, the torsion spring 7 presses tightly on the tightening lug bolt 3, so that even if the folding device of the present invention loosens, the tightening lug bolt 3 will not disengage with the groove 11 so as to make the fastening of the bicycle body 8 and the transom 10 more reliable.

For the convenience of rotation, a lever 6 is provided fixedly, on the eccentric axle 12.

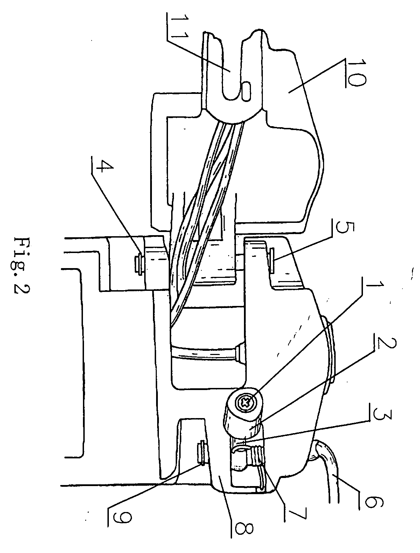

While in driving state, the eccentric axle 12 is partial and biased to the opposite side of the transom 10. Referring to Figure. 2, to fold the bicycle and transom, the lever 6 is first turned, and then the eccentric axle 12 rotates along with it. The centre of the eccentric axle 12 then becomes closer to the transom 10. As a result, the tightening lug bolt 3 is made to move axially in the groove 11 of the transom 10 so as to loosen the connection between lug bolt 3 and transom 10. The nut 2 is then rotated around to make the tightening lug bolt 3 come apart from the groove 11. Finally, the transom 10 is rotated close to the bicycle body 8 around hinge axle 5 to complete the operation of folding.

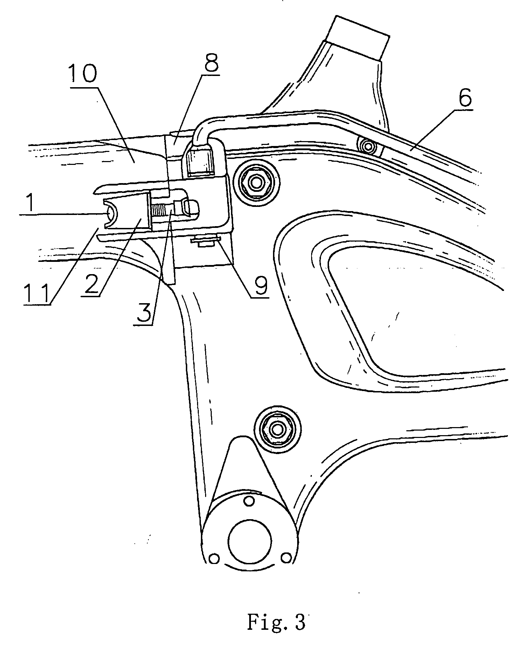

Referring to Figure. 3, conversely, to unfold the transom 10 and bicycle, the transom 10 is turned and pivoted around hinge axle 5 to the side in line with bicycle body 8. The lug bolt 3 as well as the nut 2 is then rotated into the groove 11 of transom 10. Lever 6 is then turned to make the eccentric axle 12 partial, and closer to the opposite side of transom 10 and, at the same time, move the tightening lug bolt 3 axially towards the bicycle body 8 along with the eccentric axle 12. As a result, the nut 2 is tightly chucked rotatably secured within the groove 11 by the shoulder of the groove 11 of the transom 10. Fastening operation can thereby be easily achieved as well by the aforesaid structure.

## Claims

1. A folding device for a bicycle body and transom, comprising a bicycle body (8), and a transom (10) jointed to the bicycle body (8) by means of hinge, **characterized in that**:
the folding device further comprises a tightening lug bolt (3) and a eccentric axle (12) which is inserted into a hole in head of said lug bolt (3) and body (8) of the bicycle to provide a hinge joint, a groove (11) for receiving and securing the end of the lug bolt (3) is provided on said transom (10).

2. The folding device for a bicycle body and transom according to Claim 1, wherein the end of lug bolt (3) is engaged with a nut (2) which is embedded into said groove (11) in order to joint the transom (10) with the body (8).

3. The folding device for a bicycle body and transom according to Claim 1 or 2, wherein the device further comprises a torsion spring (7) one end of which is fixed to the bicycle body (8) and the other end is disposed on the lug bolt (3).

4. The folding device for a bicycle body and transom according to any one of Claims 1 to 3, wherein the eccentric axle (12) is connected to a lever (6).

5. The folding device for a bicycle body and transom according to any preceding claim, wherein the head of said nut (2) is fastened to said lug bolt (3) by a screw (1).
